# EUROPEAN PATENT SPECIFICATION

(11) **EP 2 231 400 B1**
(45) Date of publication and mention of the grant of the patent: **01.08.2012**
(21) Application number: 08869013.6
(22) Date of filing: 19.12.2008
(51) Int. Cl.: B32B 27/08, C08J 5/18, B32B 7/02, E04B 1/68, E06B 1/62

(54) **MULTILAYER FLASHING TAPE**
MEHRLAGIGES BLINKBAND
BANDE DE SOLIN MULTICOUCHE

(30) Priority: 21.12.2007 US 16272 P
(43) Date of publication of application: 29.09.2010
(73) Proprietor: 3M Innovative Properties Company, Saint Paul, MN 55133-3427 (US)
(72) Inventor: GALUSH, Thomas B., Saint Paul, Minnesota 55133-3427 (US); CLEMENTS, George J., Saint Paul, Minnesota 55133-3427 (US); ERICKSON, John J., Saint Paul, Minnesota 55133-3427 (US); DEEB, Gerald S., Saint Paul, Minnesota 55133-3427 (US)
(74) Representative: Vossius & Partner
(86) International application number: PCT/US2008/087601
(87) International publication number: WO 2009/086056

(56) References cited:
- WO-A1-93/21402
- US-A1- 2003 089 552
- US-A1- 2003 175 497
- US-A1- 2006 040 096
- US-A1- 2006 269 713

## Description

### FIELD

The present disclosure relates generally to a flashing tape used in construction applications to seal out moisture, and methods of using the same. The flashing tapes comprise a viscoelastic core and at least one elastomeric skin layer.

### BACKGROUND

Many construction practices commonly require the installation of a self-adhered flashing tape over the fenestration joints i.e. the joint between penetrations (such as windows, doors, ventilation ducts, etc.) and the building structure as well as on various surfaces adjacent to or within the fenestration to seal out water. These flashing tapes are installed prior to installation of the siding or trim. Nails used to attach the siding or trim to the building structure are often installed right through the flashing tape.

### SUMMARY

In one aspect, the present disclosure is directed to a multi-layer flashing tape, the tape comprising a viscoelastic core layer having a first major surface opposite a second major surface, and a core layer thickness; a first elastomeric skin having a first skin thickness bonded to the first major surface of the core layer; and a second elastomeric skin having a second skin thickness bonded to the second major surface of the core layer.

In some embodiments, the second elastomeric skin layer may be eliminated such that the core layer of the construction is attached to a substrate with the single skin layer outwardly exposed.

In some embodiments, at least a portion of the exposed surface of either the first and/or second elastomeric skin layer may be coated with a pressure sensitive adhesive (PSA) to assist in the attachment of the film to a substrate. In those embodiments where the second skin layer is eliminated, a PSA may be applied to at least a portion of the core layer to assist in the attachment of the film to a substrate.

In another aspect, the present disclosure is directed to a method of sealing a fenestration, the method comprising the steps of:
(i) providing a multi-layer flashing tape, the tape comprising a viscoelastic core layer having a first major surface opposite a second major surface, and a core layer thickness; a first elastomeric skin having a first skin thickness bonded to the first major surface of the core layer; and optionally a second elastomeric skin having a second skin thickness bonded to the second major surface of the core layer; and
(ii) adhering the multi-layer flashing tape to the fenestration joints and surfaces adjacent to or within the fenestration.

In yet another aspect, the present disclosure is directed to a method of sealing an intersection between buildings surfaces, for example, a roof-wall joint, a roof valley, a roof peak, etc., wherein the method comprises the steps of:
(i) providing a multi-layer flashing tape, the tape comprising a viscoelastic core layer having a first major surface opposite a second major surface, and a core layer thickness; a first elastomeric skin having a first skin thickness bonded to the first major surface of the core layer; and optionally a second elastomeric skin having a second skin thickness bonded to the second major surface of the core layer; and
(ii) adhering the multi-layer flashing tape to the surfaces.

As used herein, the term "viscoelastic" means the characteristic of a material that has both viscous and elastic mechanical properties. Viscous materials tend to deform or flow under an applied stress. Elastic materials tend to recover or rebound after an applied stress is removed. As used to describe the materials herein, the term "viscoelastic" refers to materials having a G' Storage Modulus of about 30,000 Pa to about 500,000 Pa.

As used herein, the term "elastomeric" means the characteristic of a material that is both flexible and elastic. These materials tend to recover or rebound after an applied stress is removed. As used to describe the materials herein, the term "elastomeric" refers to materials having an elastic recovery of greater than about 70%.

As used herein, the term "fenestration" means any opening in a buildings envelope for the placement of windows, doors, skylights, ventilation ducts, chimneys and the like.

As used herein, the term "thermoplastic material" means a material which softens or can be fused together when heated and which will harden again upon cooling. This process can be repeated many times with minimal degradation of physical or material properties.

As used herein, the term "pressure sensitive adhesive" or "PSA" means an adhesive that remains tacky after curing, coating or setting and which can firmly adhere to a variety of dissimilar surfaces upon contact without the need of anything more than finger or hand pressure.

### BRIEF DESCRIPTION OF THE DRAWINGS

FIGURE illustrates a multilayer film according to some embodiments of the present disclosure.

### DETAILED DESCRIPTION

The present disclosure is directed to a self-sealing, multilayered film that may be used in conjunction with a pressure-sensitive adhesive (PSA) as part of a flashing tape designed for sealing around mechanical fasteners such as nails to prevent water penetration in a building structure. In some embodiments, the multi-layered film structure comprises a viscoelastic core layer having a first major surface opposite a second major surface, a first elastomeric skin layer bonded to the first major surface of the core layer, and an optional second elastomeric skin layer bonded to the second major surface of the core layer.

In some embodiments, the multilayered films of the current disclosure advantageously provide excellent sealing properties in a material having a thin construction relative to known materials. Typical flashing materials utilize a relatively thick layer of butyl rubber or asphaltic adhesive applied to a carrier film layer. Such constructions have been known to fail at low temperatures and additionally add substantial thickness when applied to a fenestration joint. When flashing materials are too thick, windows, trim, siding, j-channel or other structures which must be installed into or adjacent to the fenestrations may not fit properly.

In some embodiments, the multilayered film flashing materials described herein provide excellent sealing properties while having a total thickness of no greater than about 410 microns (e.g., no greater than about 380 microns) exclusive of the PSA adhesive. When applied to a fenestration joint or other surface, the flashing materials described herein protect structures from moisture penetration, even when punctured by nails, staples or other materials.

In one embodiment, the core layer has a thickness of no greater than about 127 microns. In a further embodiment, the core layer has a thickness that is no greater than about 80 microns, and in yet a further embodiment, the core layer thickness is no greater than about 55 microns.

In some embodiments, the core to skin ratio of the multilayered film is at least 0.2, e.g., at least about 0.5. In some embodiments, the core to skin ratio of the multilayered film is no greater than 5, e.g., no greater than 2.5. In some embodiments, the core to skin ratio of the multilayered film ranges from about 0.2 to about 5. In other embodiments, the core to skin ratio of the multilayered film is ranges from about 0.5 to about 2.5.

While not wishing to be bound by theory, the effectiveness of the multilayer film construction for sealing out water is dependent on both the type of skins and cores being utilized. For example, films constructed with skins that had higher elastic recovery (e.g., 96%) tended to perform better with cores that had a higher elasticity as shown by a higher G' Storage Modulus. Films constructed with skins that had lower elastic recovery (e.g., 73 to 75%) tended to work better with cores that were more deformable as shown by a lower G' Storage Modulus. It has generally been found that films with a high elastic recovery are harder to deform than films with a lower elastic recovery. Films constructed with skins that had a more intermediate level of elastic recovery (e.g., 79% to 90%) tended to perform better with a broader range of core materials. It should be noted that film samples that did not contain the core layer (as demonstrated by the Control Sample listed in the Examples) performed poorly, and that the addition of the viscoelastic core layer significantly and unexpectedly improved the performance of the film.

Core Layer

The core layer may be made from a variety of viscoelastic materials. Nonlimiting examples of materials which may be used for the core layer, either alone or in combination, include but are not limited to tackified natural rubbers; synthetic rubbers such as butyl rubber; and tackified linear and radial styrene block copolymers, such as styrene-butadiene, styrene-ethylene/butylene and styrene-isoprene; polyurethanes; polyvinyl ethers; acrylics, especially those having long chain alkyl groups; poly-alpha-olefins; asphaltics and silicones.

In one embodiment, a composition that is useful as a PSA for box sealing tape, comprising block or random styrene elastomers and tackifiers is used. In another embodiment, the core layer can also be made from a block or random styrene elastomer copolymer resin without tackifier.

The viscoelastic core layer has a storage modulus of from 30,000 Pa to 500,000 Pa. In some embodiments, the core has a storage modulus of no greater than 100,000 Pa, e.g., no greater than 75,000 Pa. In some embodiments, the core has a storage modulus at least 200,000 Pa, e.g., at least 400,000 Pa. In some embodiments, the viscoelastic core layer has a Glass Transition Temperature of from 200 K to 260 K.

Skin Layer(s)

Examples of elastomeric materials which can be utilized in the first or second skin layers include thermoplastic film forming polymers. Exemplary thermoplastic film forming polymers either alone or in combination include but are not limited to polyolefins (linear or branched), olefin block copolymers, polyamides, polystyrenes, polystyrene-butadienes, nylons, polyesters, polyester copolymers, polyurethanes, polysulfones, polyvinylidene chloride, styrene-maleic anhydride copolymers, styrene acrylonitrile copolymers, ionomers based on sodium or zinc salts of ethylene methacrylic acid, polymethylmethacrylates, cellulosics, fluoroplastics, acrylic polymers and copolymers, polycarbonates, polyacrylonitriles, ethylene-vinyl acetate copolymers, and mixtures thereof.

In some embodiments, at least one skin layer, in some embodiments both skin layers, have a tensile modulus of no greater than 8 MPa, e.g., no greater than 5 MPa. In some embodiments, at least one skin layer, in some embodiments both skin layers, have a tensile modulus of between 10 and 20 MPa. In some embodiments, at least one skin layer, in some embodiments both skin layers, have a tensile modulus of at least 30 MPa, e.g., at least 40 MPa. In some embodiments, at least one skin layer, in some embodiments both skin layers, have an elastic recovery of at least 70%, in some embodiments, at least 90%, or even at least 95%.

In some embodiments, the construction includes a core layer having a storage modulus at least 200,000 Pa, e.g., at least 400,000 Pa, and at least one skin layer (in some embodiments, both skin layers) having a tensile modulus of no greater than 8 MPa, e.g., no greater than 5 MPa. In some embodiments, the construction includes a core layer having a storage modulus no greater than 100,000 Pa, e.g., no greater than 75,000 Pa, and at least one skin layer (in some embodiments, both skin layers) having a tensile modulus of at least 30 MPa, e.g., at least 40 MPa.

PSA Layer

In an embodiment where either one or two skin layers are used, a PSA layer may be applied to at least a portion of the exposed surface of one or both skin layers, or to the underside of the core layer, in order to facilitate attachment of the core or skin layer to the substrate or joint to be protected. Suitable materials which may be utilized for the PSA layer, either alone or in combination, include, but are not limited to tackified natural rubbers; synthetic rubbers such as butyl rubber; and tackified linear and radial styrene block copolymers, such as styrene-butadiene, styrene-ethylene/butylene and styrene-isoprene; polyurethanes; polyvinyl ethers; acrylics, especially those having long chain alkyl groups; poly-alpha-olefins; asphaltics and silicones.

In one embodiment, an acrylic PSA that offers low temperature adhesion performance is used. The PSA layer should have sufficient adhesive strength to adhere the flashing material to a building structure comprising materials such as wood, polyvinyl chloride, rigid polystyrene foamboard, polymer materials used in housewrap applications, concrete block, poured concrete, building paper, and the like. The PSA layer may be applied with full or partial coverage on one or both of the skin layers, or the core layer in the embodiment where only one skin layer is used.

The PSA layer may be applied to the multilayer film structure by extrusion, lamination or other conventionally known methods. A release liner may be applied over the adhesive to protect the adhesive until the multilayer flashing film is ready for use.

Additional Additives

The core layer and/or the skin layers may also contain other components such as pigments, fillers, ultraviolet absorbing agents, light stabilizers (e.g., hindered amine light stabilizers), slip agents, antiblocking agents, antistatic agents, processing aids, and carrier resins for additives, all of which are familiar to those skilled in the art. These additives are preferably chosen so as not to interfere with the desired performance and physical, chemical and adhesive properties of the film construction.

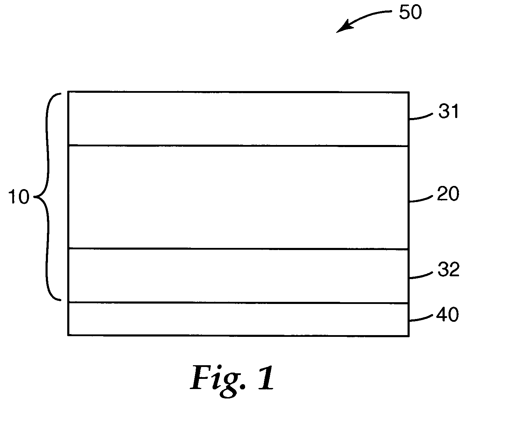

An exemplary multilayer film according to some embodiments of the present disclosure is shown in the Figure. Multilayer film **10** includes core layer **20** and first skin layer 31 on one major surface of the core layer. In some embodiments, second skin layer 32 is located on the opposite major surface of core layer **20.** In some embodiments, a tape, e.g., a flashing tape, can be prepared by including optional adhesive layer **40,** which is shown adjacent second skin layer **32** in the Figure.

The multilayer films of the present disclosure may be formed by any convenient layer forming process such as coating, lamination, co-extruding layers or stepwise extrusion of layers. Co-extrusion per se is well-known. The individual layers are typically coextruded through a specialized feed block or a specialized die that will bring the diverse materials into contact while forming the film.

Co-extrusion may be carried out with multilayer feed blocks or dies, for example, a three-layer feed block (fed to a die) or a three-layer die such as those made by Cloeren Co., Orange, Texas. Typically, streams of materials flowing out of extruders at different viscosities are separately introduced into the feedblock and converge to form a film.

The feed block and die used are typically heated to facilitate polymer flow and layer adhesion. The temperature of the die depends on the polymers used. Whether the film is prepared by coating, lamination, sequential extrusion, co-extrusion, or a combination thereof, the film formed and its layers will preferably have substantially uniform thicknesses across the film.

Flashing materials made with the multi-layer films as described herein may be wound onto cores and packaged in roll-form, in any size that is convenient for covering various fenestration joints or other related surfaces. In use, the flashing material is installed onto various building surfaces so that a path for draining incidental water is provided.

As used herein and in the appended claims, the singular forms "a," "and," and "the" include plural referents unless the context clearly dictates otherwise. Unless otherwise indicated, all numbers expressing chemical, physical or other properties in the specification and claims are to be understood as being modified by the term "about" in all instances. Accordingly, unless indicated to the contrary, the numerical parameters set forth in the specification and attached claims are approximations that may vary depending upon the desired properties sought to be obtained by the present disclosure. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical values, however, inherently contain certain errors necessarily resulting from the standard deviation found in their respective testing measurements.

Illustrative embodiments of the disclosure are discussed and reference has been made to possible variations within the scope of this disclosure. These and other variations and modifications in the disclosure will be apparent to those skilled in the art without departing from the scope of the disclosure, and it should be understood that this disclosure is not limited to the illustrative embodiments set forth herein.

### Examples

I. Water Penetration

The testing was conducted using a water spray booth in accordance with the International Code Council (ICC) Acceptance Criteria for Flexible Flashing Materials (AC-148) and the American Architectural Manufacturers Association document AAMA 711. The test method listed in AAMA 711 Annex 1 is a modified version of ASTM E331. Note: The test method requires 3 sample boards run simultaneously at an air pressure of 5 inches of water (1.25 kPa) and 3 sample boards run simultaneously at an air pressure of 1.57 inches of water (0.39 kPa). For most of these examples, 4 sample boards (two at a time) at 5 inches of water pressure (1.25 kPa), were tested. The data is based on initial conditions only - no thermal cycling was performed. For some samples that performed very poorly, only two panels were tested.

Individual sample boards were prepared in accordance with AAMA 711 Annex 1, as generally follows. The required pattern of holes was drilled in a square plywood panel. A water resistive barrier (WRB) (Tyvek®, a spunbonded olefin film, available from Dupont™ Company) was applied over the holes and stapled to the board. Samples of the exemplary multilayer constructions were then adhered to the board over the WRB using 58 microns (2.3 mils) of 3M 300 LSE Pressure Sensitive Adhesive to adhere the samples during testing. Roofing nails approximately 3 mm (120 mils) in diameter were then driven through the test constructions and the WRB, and into the board. The resulting sample boards were then tested.

II. Mechanical Properties

Elastic Recovery was measured using a modified version of ASTM D5459 on 3 specimens taken from the machine direction at a width of 13 mm (0.5 inch). Tensile Modulus and 1% Secant Modulus were measured using a modified version of ASTM D882 on 3 specimens taken from the machine direction at a width of 13 mm (0.5 in.). Shear Storage Modulus (G') was measured on core samples C-1 to C-4 using an RDA II rheometer from Rheometrics, Inc. at 1 Hz, 1% strain, at 21 °C (70 °F), 49% relative humidity, using 25 mm diameter parallel plates at 500 g compression. Shear Storage Modulus (G') for core sample C-5 was measured using an ARES rheometer from TA Instruments. The measurements were taken using 25 mm diameter parallel plates in dynamic mode with approximately 450 g compressive force at 1 Hz, 1% Strain, at approximately 24 °C (74 °F)

The glass transition temperature (Tg) was calculated using the Fox equation.

Core Materials.

Core 1 (C-1) was a Styrene-Ethylene/Butylene-Styrene Polymer (KRATON G 1657; from Kraton Polymers). Core 1 had a Tg of 215 K and a storage modulus of 477,210 Pa.

Core 2 (C-2) was a Styrene-Isoprene-Styrene Polymer (KRATON D1161P; from Kraton Polymers). Core 2 had a Tg of 215 K and a storage modulus of 240,120 Pa.

Core 3 (C-3) was a pressure sensitive adhesive comprising a blend of 45 wt.% of a Styrene-Isoprene-Styrene Polymer (KRATON D1161P); 45 wt.% of a Aromatically Modified C-5 Hydrocarbon Resin (WINGTACK PLUS; from Sartomer); and 10 wt.% of a liquid polyterpene resin (SYLVARES TR A25; from Arizona Chemicals). Core 3 had a Tg of 259 K and a storage modulus of 68,764 Pa.

Core 4 (C-4) was a blend of 50 wt.% of a Styrene-Isoprene-Styrene Polymer (KRATON D1161P) and 50 wt.% of a Liquid Polybutene (MW=900) (INDOPOL H-100; from Ineos). Core 4 had a Tg of 208 K and a storage modulus of 35,016 Pa.

Core 5 (C-5) was tackified styrene-butadiene-styrene copolymer described as example CE6 in U.S. Patent Application No. 6,277,488 (Kobe, et al.). Core 5 had a Tg of 260 K and a storage modulus of 90,710 Pa.

Skin Materials

The properties of the various skin materials are summarized in Table 1. Skin 4 was a blend of 80 wt.% ethylene octene copolymer (EXACT 0201; from Exxon) and 20 wt.% Acid/Acrylate-modified ethylene vinyl acetate (EVA) (BYNEL 3101; from Du Pont).

**Table 1: Skin materials.**

| Skin | Description | Trade Name | Source | Elastic Recovery | Tensile Modulus (MPa) | 1% Secant Modulus (MPa) |
|---|---|---|---|---|---|---|
| S-1 | urethane -polyether | IROGRAN A 85 P 4394 | Huntsman | 95.2% | 11.4 | 39.9 |
| S-2 | ethylene octene copolymer | EXACT 0201 | Exxon | 73.9% | 41.1 | 76.1 |
| S-3 | ethylene octene copolymer | EXACT 4151 | Exxon | 75.2% | 14.6 | 68.7 |
| S-4 | Blend | (described above) | - | 78.5% | 35.8 | 96.7 |
| S-5 | urethane -polyether | PELLETHANE 2103-80AEF | Dow | 95.5% | 12.7 | 99.2 |
| S-6 | ethylene octene copolymer | ENGAGE 8003 | Dow | 90.1% | 4.0 | 137.8 |

Examples 1-30 were prepared using various combinations of low and high modulus core and skin materials using a blown film process. The core and skin layers were each fed to a three-layer, 5 cm (2 inch) annual die using 1.9 cm (0.75 inch) single screw BRABENDER extruders. The tubular coextruded blown film was collapsed to form a flat tube approximately 15 cm (6 inch) wide. This construction was then wound on a paper core.

Comparative Example CE1 was prepared using 19 mm (0.75 inch) BRABENDER (S. Hackensack, NJ) lab extruder with mixing screw. After melting and mixing, the extrudate was forced through a 15 cm (6 inch) flat cast extrusion die to form a molten film. The molten film was then passed through a chilled roll stack to cool and solidify the resins into final, finished film form.

The sample constructions and results are summarized in Tables 2a through 2g.

**Table 2a: Multilayer flashing tapes with low tensile modulus polyolefin skins.**

| Ex. | Outside Skin | Core | Inside Skin | Thickness (skin, core, skin) microns | Nails Pass | Nails Fail | Board Pass (%) | Nail Pass (%) |
|---|---|---|---|---|---|---|---|---|
| 1 | S-6 | C-1 | S-6 | 51, 76, 51 | 11 | 1 | 75% | 92% |
| 2 | S-6 | C-2 | S-6 | 51,76,51 | 12 | 0 | 100% | 100% |

**Table 2b: Multilayer flashing tapes with intermediate tensile modulus polyolefin skins.**

| Ex. | Outside Skin | Core | Inside Skin | Thickness (skin, core, skin) microns | Nails Pass | Nails Fail | Board Pass (%) | Nail Pass (%) |
|---|---|---|---|---|---|---|---|---|
| 3 | S-3 | C-1 | S-3 | 51, 76, 51 | 3 | 3 | 50% | 50% |
| 4 | S-3 | C-2 | S-3 | 51, 76, 51 | 4 | 2 | 0% | 67% |
| 5 | S-3 | C-2 | S-3 | 51, 127,51 | 1 | 5 | 0% | 17% |
| 6 | S-3 | C-3 | S-3 | 51, 76, 51 | 12 | 0 | 100% | 100% |
| 7 | S-3 | C-4 | S-3 | 51, 76, 51 | 5 | 1 | 50% | 83% |
| 8 | S-3 | C-4 | S-3 | 51, 127, 51 | 10 | 2 | 50% | 83% |

**Table 2c: Multilayer flashing tapes with high tensile modulus polyolefin skins.**

| Ex. | Outside Skin | Core | Inside Skin | Thickness (skin, core, skin) microns | Nails Pass | Nails Fail | Board Pass (%) | Nail Pass (%) |
|---|---|---|---|---|---|---|---|---|
| 9 | S-2 | C-1 | S-2 | 51,76,51 | 0 | 6 | 0% | 0% |
| 10 | S-2 | C-2 | S-2 | 51,76,51 | 1 | 5 | 0% | 17% |
| 11 | S-2 | C-3 | S-2 | 51, 76, 51 | 9 | 3 | 50% | 75% |

**Table 2d: Multilayer flashing tapes with low and high tensile modulus hybrid skins.**

| Ex. | Outside Skin | Core | Inside Skin | Thickness (skin, core, skin) microns | Nails Pass | Nails Fail | Board Pass (%) | Nail Pass (%) |
|---|---|---|---|---|---|---|---|---|
| 12 | S-2 | C-1 | S-1 | 51, 76, 51 | 12 | 0 | 100% | 100% |
| 13 | S-2 | C-2 | S-1 | 51, 76, 51 | 1 | 5 | 0% | 17% |
| 14 | S-2 | C-1 | S-5 | 51, 76, 51 | 11 | 1 | 75% | 92% |
| 15 | S-2 | C-2 | S-5 | 51, 76, 51 | 0 | 6 | 0% | 0% |
| 16 | S-2 | C-3 | S-5 | 51, 76, 51 | 12 | 0 | 100% | 100% |

**Table 2e: Multilayer flashing tapes with low and intermediate tensile modulus hybrid skins.**

| Ex. | Outside Skin | Core | Inside Skin | Thickness (skin, core, skin) microns | Nails Pass | Nails Fail | Board Pass (%) | Nail Pass (%) |
|---|---|---|---|---|---|---|---|---|
| 17 | S-3 | C-1 | S-5 | 51, 76, 51 | 12 | 0 | 100% | 100% |
| 18 | S-3 | C-2 | S-5 | 51, 76, 51 | 12 | 0 | 100% | 100% |
| 19 | S-3 | C-3 | S-5 | 51, 76, 51 | 12 | 0 | 100% | 100% |
| 20 | S-3 | C-4 | S-5 | 51, 76, 51 | 3 | 3 | 50% | 50% |
| 21 | S-6 | C-2 | S-5 | 51,76,51 | 12 | 0 | 100% | 100% |
| 22 | S-6 | C-3 | S-5 | 51,76,51 | 12 | 0 | 100% | 100% |
| 23 | S-6 | C-4 | S-5 | 51, 76, 51 | 3 | 3 | 50% | 50% |

**Table 2f: Multilayer flashing tapes with high tensile modulus blended skins.**

| Ex. | Outside Skin | Core | Inside Skin | Thickness (skin, core, skin) microns | Nails Pass | Nails Fail | Board Pass (%) | Nail Pass (%) |
|---|---|---|---|---|---|---|---|---|
| CE1 | S-4 | none | none | 152,0,0 | 5 | 7 | 25% | 42% |
| 24 | S-4 | C-1 | S-4 | 51, 76, 51 | 11 | 1 | 75% | 92% |
| 25 | S-4 | C-2 | S-4 | 51, 76, 51 | 12 | 0 | 100% | 100% |
| 26 | S-4 | C-3 | S-4 | 51, 76, 51 | 12 | 0 | 100% | 100% |

**Table 2g: Multilayer flashing tapes with intermediate modulus urethane skins.**

| Ex. | Outside Skin | Core | Inside Skin | Thickness (skin, core, skin) microns | Nails Pass | Nails Fail | Board Pass (%) | Nail Pass (%) |
|---|---|---|---|---|---|---|---|---|
| 27 | S-5 | C-1 | S-5 | 51, 76, 51 | 7 | 5 | 25% | 58% |
| 28 | S-5 | C-2 | S-5 | 51,76,51 | 12 | 0 | 100% | 100% |
| 29 | S-5 | C-3 | S-5 | 51, 76, 51 | 4 | 2 | 50% | 67% |
| 30 | S-5 | C-4 | S-5 | 51, 76, 51 | 4 | 2 | 50% | 67% |

Example 31 was prepared with an acrylic pressure sensitive adhesive core. The core was a 76 micron thick layer of a cured monomer mixture containing 90 wt.% isooctyl acrylate and 10 wt.% acrylic acid. Skin material S-1 was hand-laminated as a 51 micron thick layer to opposite sides of the core. Following the Water Penetration Test procedure, ten out of twelve nails passed resulting in a board pass rate of 75% and a nail pass rate of 83%.

Examples 32 and 33 illustrate a construction with only a single skin layer. Example 32 included a 152 micron thick layer of blended skin material S-4 hand-laminated to a 254 micron thick layer of Core 5. Example 33 included a 178 micron thick layer of blended skin material S-4 hand-laminated to a 102 micron thick layer of Core 5. The samples were subjected to the Water Penetration Test procedure. The results are summarized in Table 3.

**Table 3: Water Penetration Test results for two-layer samples.**

| Ex. | Outside Skin | Core | Inside Skin | Thickness (skin, core, skin) microns | Nails Pass | Nails Fail | Board Pass (%) | Nail Pass (%) |
|---|---|---|---|---|---|---|---|---|
| 32 | S-4 | C-5 | none | 152,254,0 | 5 | 1 | 50% | 83% |
| 33 | S-4 | C-5 | none | 178, 102, 0 | 12 | 0 | 100% | 100% |

Three commercially available products were tested using the Water Penetration Test procedure. Comparative Example C-2 was a flashing tape made with Dupont™ Tyvek®, an elastic material, a polyolefin film, and a highly adhesive butyl sealant (DuPont™ FlexWrap™). Comparative Example C-3 consisted of high performance cross-laminated polyethylene film and rubberized asphalt (Grace Vycor® Plus). Comparative Example C-3 is believed to be a butyl rubber PSA with a metal foil (Pella®Smartflash™ INSTALLATION TAPE).

**Table 4: Water Penetration Test results for commercially available samples.**

| Ex. | Nails Pass | Nails Fail | Board Pass (%) | Nail Pass (%) |
|---|---|---|---|---|
| C-2 | 11 | 1 | 75% | 92% |
| C-3 | 12 | 0 | 100% | 100% |
| C-4 | 3 | 9 | 0% | 25% |

Example 34 was a three-layer construction adhered to a board as described above, except that no WRB was used. The results of the Water Penetration Test are included in Table 5, and show that good results were achieved even without the use of the WRB.

**Table 5: Water Penetration Test results for a sample prepared without a water resistive barrier.**

| Ex. | Outside Skin | Core | Inside Skin | Thickness (skin, core, skin) microns | Nails Pass | Nails Fail | Board Pass (%) | Nail Pass (%) |
|---|---|---|---|---|---|---|---|---|
| 34 | S-4 | C-1 | S-4 | 51,51,51 | 6 | 0 | 100% | 100% |

Various modifications and alterations of this invention will become apparent to those skilled in the art without departing from the scope and spirit of this invention.

## Claims

1. A multilayer film comprising:
a viscoelastic core layer having a first major surface opposite a second major surface, and a core layer thickness; and
a first elastomeric skin having a first skin thickness bonded to the first major surface of the core layer;
wherein the viscoelastic core layer has a storage modulus of from 30,000 Pa to 500,000 Pa.

2. The multilayer film of claim 1, further comprising a second elastomeric skin having a second skin thickness bonded to the second major surface of the core layer.

3. The multilayer film of claim 2, wherein a first ratio of the core layer thickness to the first skin thickness and a second ratio of the core layer thickness to the second skin layer thickness are each no greater than 5.

4. The multilayer film of claim 2 or 3, wherein both the first ratio and the second ratio are at least 0.2..

5. The multilayer film of claim 1, wherein the viscoelastic core layer has a storage modulus of no greater than 100,000 Pa.

6. The multilayer film of claim 1, wherein the viscoelastic core layer has a storage modulus of at least 200,000 Pa.

7. The multilayer film according to any one of the preceding claims, wherein the core layer thickness is no greater than 127 microns.

8. The multilayer film according to any one of the preceding claims, wherein the first skin thickness and the second skin thickness are each no greater than 127 microns.

9. The multilayer film according to any one of the preceding claims, wherein at least one elastomeric skin has a tensile modulus of no greater than 8 MPa.

10. The multilayer film according to any one of claims 1 to 8, wherein at least one elastomeric skin has a tensile modulus of between 10 and 20 MPa.

11. The multilayer film according to any one of claims 1 to 8, wherein at least one elastomeric skin has a tensile modulus of at least 30 MPa.

12. The multilayer film according to any one of claims 1 to 8, wherein the core layer has a storage modulus of at least 200,000 Pa, and at least one elastomeric skin has a tensile modulus of no greater than 8 MPa.

13. The multilayer film according to any one of claims 1 to 9, wherein the core layer has a storage modulus no greater than 100,000 Pa, and at least one elastomeric skin has a tensile modulus of at least 30 MPa.

14. The multilayer film according to any one of the preceding claims, wherein at least one elastomeric skin has an elastic recovery of greater than 90%.

15. The multilayer film according to any one of the preceding claims, wherein viscoelastic core and the first elastomeric skin comprise a thermoplastic material.

16. The multilayer film according to any one of the preceding claims, further comprising an adhesive layer on at least a portion of one or more of the first elastomeric skin, the second elastomeric skin, and the core layer.

17. The multilayer film according to any one of the preceding claims, wherein the film is self-sealing as indicated by an 80% nail pass rate based on the Modified ASTM E331 Spray Booth Test.

18. A method of sealing a surface, the method comprising the steps of:
(i) providing the multilayer film according to any one of the preceding claims; and
(ii) adhering the multilayer film to the surface.

19. The method of claim 18, wherein the surface is a fenestration surface.

20. The method of claim 19, wherein the surface comprises the intersection between buildings surfaces, optionally wherein the building surfaces are selected from the group consisting of a roof-wall joint, a roof valley, a wall-to-wall joint, ledger-board wall joints, the joint between the underside of a roof and the adjacent wall, and a roof peak.

## Patentansprüche

1. Mehrlagige Folie, Folgendes umfassend:
eine viskoelastische Kernlage, die eine erste Hauptoberfläche gegenüber einer zweiten Hauptoberfläche und eine Kernlagendicke aufweist, und
eine erste elastomere Außenhaut, die eine erste Außenhautdicke aufweist und an die erste Hauptoberfläche der Kernlage gebunden ist,
wobei die viskoelastische Kernlage einen Speichermodul von 30.000 Pa bis 500.000 Pa aufweist.

2. Mehrlagige Folie nach Anspruch 1, ferner eine zweite elastomere Außenhaut umfassend, die eine zweite Außenhautdicke aufweist und an die zweite Hauptoberfläche der Kernlage gebunden ist.

3. Mehrlagige Folie nach Anspruch 2, wobei ein erstes Verhältnis der Kernlagendicke zur ersten Außenhautdicke und ein zweites Verhältnis der Kernlagendicke zur zweiten Außenhautdicke jeweils nicht größer als 5 ist.

4. Mehrlagige Folie nach Anspruch 2 oder 3, wobei sowohl das erste Verhältnis als auch das zweite Verhältnis mindestens 0,2 betragen.

5. Mehrlagige Folie nach Anspruch 1, wobei die viskoelastische Kernlage einen Speichermodul von nicht mehr als 100.000 Pa aufweist.

6. Mehrlagige Folie nach Anspruch 1, wobei die viskoelastische Kernlage einen Speichermodul von mindestens 200.000 Pa aufweist.

7. Mehrlagige Folie nach einem der vorhergehenden Ansprüche, wobei die Kernlagendicke nicht mehr als 127 Mikrometer beträgt.

8. Mehrlagige Folie nach einem der vorhergehenden Ansprüche, wobei die erste Außenhautdicke und die zweite Außenhautdicke jeweils nicht mehr als 127 Mikrometer beträgt.

9. Mehrlagige Folie nach einem der vorhergehenden Ansprüche, wobei mindestens eine elastomere Außenhaut einen Zugmodul von nicht mehr als 8 MPa aufweist.

10. Mehrlagige Folie nach einem der Ansprüche 1 bis 8, wobei mindestens eine elastomere Außenhaut einen Zugmodul zwischen 10 und 20 MPa aufweist.

11. Mehrlagige Folie nach einem der Ansprüche 1 bis 8, wobei mindestens eine elastomere Außenhaut einen Zugmodul von mindestens 30 MPa aufweist.

12. Mehrlagige Folie nach einem der Ansprüche 1 bis 8, wobei die Kernlage einen Speichermodul von mindestens 200.000 Pa aufweist und mindestens eine elastomere Außenhaut einen Zugmodul von nicht mehr als 8 MPa aufweist.

13. Mehrlagige Folie nach einem der Ansprüche 1 bis 9, wobei die Kernlage einen Speichermodul von nicht mehr als 100.000 Pa aufweist und mindestens eine elastomere Außenhaut einen Zugmodul von mindestens 30 MPa aufweist.

14. Mehrlagige Folie nach einem der vorhergehenden Ansprüche, wobei mindestens eine elastomere Außenhaut eine Rückdehnung von mehr als 90 % aufweist.

15. Mehrlagige Folie nach einem der vorhergehenden Ansprüche, wobei die viskoelastische Kernlage und die erste elastomere Außenhaut ein thermoplastisches Material umfassen.

16. Mehrlagige Folie nach einem der vorhergehenden Ansprüche, ferner auf mindestens einem Abschnitt einer oder mehrerer der ersten elastomeren Außenhaut, der zweiten elastomeren Außenhaut und der Kernlage eine Klebstofflage umfassend.

17. Mehrlagige Folie nach einem der vorhergehenden Ansprüche, wobei die Folie selbstabdichtend ist, wie es basierend auf der modifizierten Sprühkabinenprüfung nach ASTM E331 durch eine Nageldurchtrittsrate von 80 % angezeigt ist.

18. Verfahren zum Abdichten einer Oberfläche, wobei das Verfahren folgende Schritte umfasst:
(i) Bereitstellen der mehrlagigen Folie nach einem der vorhergehenden Ansprüche und
(ii) Anhaften der mehrlagigen Folie an der Oberfläche.

19. Verfahren nach Anspruch 18, wobei die Oberfläche eine Fensterwerkoberfläche ist.

20. Verfahren nach Anspruch 19, wobei die Oberfläche den Übergang zwischen Gebäudeoberflächen umfasst, wobei die Gebäudeoberflächen optional aus der Gruppe ausgewählt werden, die aus einem Dach-Wand-Anschluss, einer Dachkehle, einem Wand-Wand-Anschluss, Balken-Bretterwand-Anschlüssen, dem Anschluss zwischen der Unterseite eines Daches und der angrenzenden Wand und einem Dachfirst besteht.

## Revendications

1. Film multicouche comprenant :
une couche centrale viscoélastique ayant une première surface principale opposée à une deuxième surface principale, et une épaisseur de couche centrale ; et
une première pellicule élastomère ayant une épaisseur de première pellicule fixée à la première surface principale de la couche centrale ;
dans lequel la couche centrale viscoélastique a un module de conservation de 30 000 Pa à 500 000 Pa.

2. Film multicouche selon la revendication 1, comprenant en outre une deuxième pellicule élastomère ayant une épaisseur de deuxième pellicule fixée à la deuxième surface principale de la couche centrale.

3. Film multicouche selon la revendication 2, dans lequel chacun d'un premier rapport de l'épaisseur de la couche centrale contre l'épaisseur de la première pellicule et d'un deuxième rapport de l'épaisseur de la couche centrale contre l'épaisseur de la deuxième pellicule n'est pas supérieur à 5.

4. Film multicouche selon la revendication 2 ou 3, dans lequel chacun du premier rapport et du deuxième rapport vaut au moins 0,2.

5. Film multicouche selon la revendication 1, dans lequel la couche centrale viscoélastique a un module de conservation qui n'est pas supérieur à 100 000 Pa.

6. Film multicouche selon la revendication 1, dans lequel la couche centrale viscoélastique a un module de conservation d'au moins 200 000 Pa.

7. Film multicouche selon l'une quelconque des revendications précédentes, dans lequel l'épaisseur de la couche centrale n'est pas supérieure à 127 microns.

8. Film multicouche selon l'une quelconque des revendications précédentes, dans lequel chacune de l'épaisseur de la première pellicule et de l'épaisseur de la deuxième pellicule n'est pas supérieure à 127 microns.

9. Film multicouche selon l'une quelconque des revendications précédentes, dans lequel au moins une pellicule élastomère a un module en traction qui n'est pas supérieur à 8 MPa.

10. Film multicouche selon l'une quelconque des revendications 1 à 8, dans lequel au moins une pellicule élastomère a un module en traction de 10 MPa à 20 MPa.

11. Film multicouche selon l'une quelconque des revendications 1 à 8, dans lequel au moins une pellicule élastomère a un module en traction d'au moins 30 MPa.

12. Film multicouche selon l'une quelconque des revendications 1 à 8, dans lequel la couche centrale a un module de conservation d'au moins 200 000 Pa, et au moins une pellicule élastomère a un module en traction qui n'est pas supérieur à 8 MPa.

13. Film multicouche selon l'une quelconque des revendications 1 à 9, dans lequel la couche centrale a un module de conservation qui n'est pas supérieur à 100 000 Pa, et au moins une pellicule élastomère a un module en traction d'au moins 30 MPa.

14. Film multicouche selon l'une quelconque des revendications précédentes, dans lequel au moins une pellicule élastomère a une reprise élastique supérieure à 90 %.

15. Film multicouche selon l'une quelconque des revendications précédentes, dans lequel la couche centrale viscoélastique et la première pellicule élastomère comprennent un matériau thermoplastique.

16. Film multicouche selon l'une quelconque des revendications précédentes, comprenant en outre une couche d'adhésif sur au moins une partie d'une ou plusieurs de la première pellicule élastomère, de la deuxième pellicule élastomère, et de la couche centrale.

17. Film multicouche selon l'une quelconque des revendications précédentes, le film étant auto-étanche comme l'indique un taux de succès de 80 % après enfoncement des clous selon l'Essai en cabine de pulvérisation suivant la méthode ASTM E331 modifiée.

18. Procédé d'étanchement d'une surface, le procédé consistant à :
(i) fournir le film multicouche selon l'une quelconque des revendications précédentes ; et
(ii) faire adhérer le film multicouche à la surface.

19. Procédé selon la revendication 18, dans lequel la surface est une surface vitrée.

20. Procédé selon la revendication 19, dans lequel la surface comprend l'intersection entre des surfaces de bâtiments, les surfaces des bâtiments pouvant éventuellement être sélectionnées dans le groupe constitué d'un joint entre un toit et un mur, d'une noue, d'un joint entre deux murs, de joints entre des lambourdes et des murs, du joint entre le dessous d'un toit et le mur adjacent, et du faîte d'un toit.
